# EUROPEAN PATENT APPLICATION

(11) **EP 0 761 148 A1**
(43) Date of publication of application: **12.03.1997**
(21) Application number: 96202443.6
(22) Date of filing: 02.09.1996
(51) Int. Cl.: A47J 31/06, A47J 31/02

(54) **Coffee filtering system**

(30) Priority: 01.09.1995 NL 1001120
(71) Applicant: Sara Lee/DE N.V., 3532 AA Utrecht (NL)
(72) Inventor: Kaper, Louris, 3772 ZC Barneveld (NL); Dijs, Daniel Albertus Jozef, 3533 VP Utrecht (NL)
(74) Representative: Smulders, Theodorus A.H.J., Ir.

(57) **Abstract**

A coffee filtering system (1) comprising a coffee filtering holder (2) for arrangement on a beverage container, such as a cup, mug or glass and the like. The system further comprises a sachet (4) filled with ground coffee for preparing a single cup of coffee. The holder comprises a water reservoir (6) in which hot water can be provided and a bottom (8) with at least one orifice (10). In use, the sachet (4) is located between the water reservoir (6) and the orifice (10), while a circumferential edge (12) of the sachet is connected to an inner wall (14) of the holder in sealing engagement therewith. The coffee filtering holder comprises a first (20) and a second holder part (22), with the first holder part comprising the bottom. In use, the circumferential edge (12) of the sachet is disposed between closing parts (24,26) of the first and second holder part in sealing engagement therewith. The first (20) and second (22) holder part can be displaced relative to each other, so that the sachet (4) is rendered free and can be replaced by another sachet.

## Description

The invention relates to a coffee filtering system for preparing a single cup of coffee, comprising a coffee filtering holder for arrangement on a beverage container, such as a cup, mug or glass and the like, and a sachet filled with ground coffee, the holder comprising a water reservoir in which hot water can be provided and a bottom with at least one orifice, while in use the sachet is located between the water reservoir and the orifice, with a circumferential edge of the sachet connected to an inner wall of the holder in sealing engagement.

The invention also relates to a coffee filtering holder and a sachet for use in such a system.

Such systems are known per se and are used both in the catering industry and for domestic use. The coffee filtering system is arranged, for instance, on a coffee cup and filled with hot water. The coffee extract will then gradually fill the cup until the entire water reservoir is empty. An advantage of these systems is the convenience for a user, since he needs to perform only a few very simple operations to prepare a cup of coffee.

In the known systems, the sachet forms an undetachable part of the coffee filtering holder, so that the entire coffee filtering system has to be discarded after a cup of coffee has been prepared. This leads to a considerable economic waste and also the environmental effects cannot be considered negligible.

The object of the invention is to provide a coffee filtering system whereby this drawback is obviated. In doing so, a further object has been to avoid any adverse effect on the system's convenience in use. To that end, the system according to the invention is characterized in that the coffee filtering holder comprises a first and a second holder part, with the first holder part comprising the bottom, and when the first and second holder parts are in a service position, the circumferential edge of the sachet is disposed between closing parts of the first and second holder parts in sealing engagement therewith, while the first and second holder parts can be displaced relative to each other to leave the service position, so that the sachet is rendered free and can be replaced by another sachet.

According to the invention, presently the holder need not be discarded after use, inasmuch as it can be used again after being filled with a new sachet. Also, the convenience for a user is not adversely affected, since replacing the sachet does not require any complicated operations to be performed. By moving the holder parts themselves relative to each other, so that the service position is left, a sachet is rendered clear and can be replaced. A user is therefore not required to move small parts, such as rings and the like. Moreover, the system according to the invention also provides a simple but effective seal between the sachet and the holder.

The invention will be further explained with reference to the drawings, in which:
Fig. 1a is a view of a first embodiment of a coffee filtering system according to the invention;
Fig. 1b is a cross section of the coffee filtering system according to Fig. 1a;
Fig. 2a is a view of a second embodiment of a coffee filtering system according to the invention;
Fig. 2b is a cross section of the coffee filtering system according to Fig. 2a;
Fig. 3a is a view of a third embodiment of a coffee filtering system according to the invention;
Fig. 3b is a cross section of the coffee filtering system according to Fig. 3a;
Fig. 4a is a view of a fourth embodiment of a coffee filtering system according to the invention;
Fig. 4b is a cross section of the coffee filtering system according to Fig. 4a;
Fig. 4c is a top plan view of the second holder part according to Fig. 4a;
Fig. 5a is a view of a first embodiment of a sachet of a coffee filtering system according to any one of the preceding drawings; and
Fig. 5b is a cross section of the sachet according to Fig. 5a.

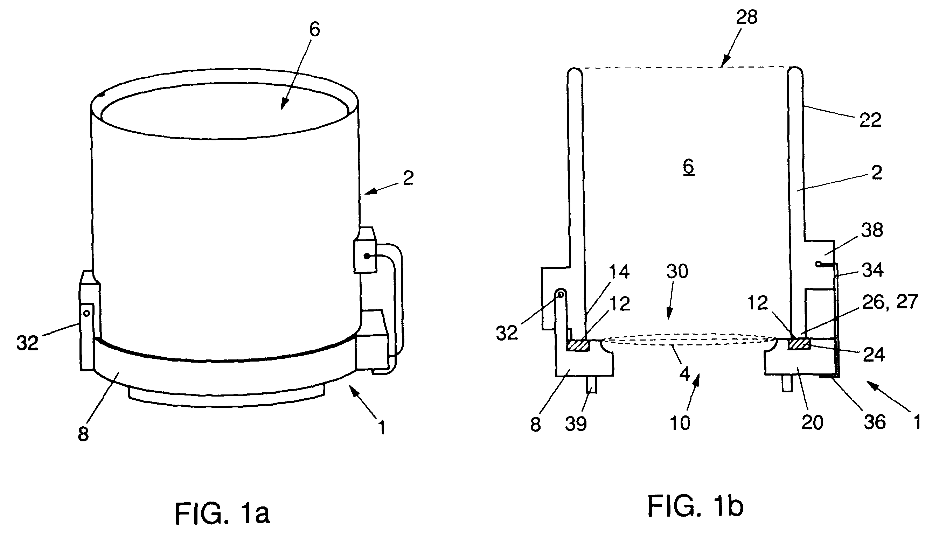

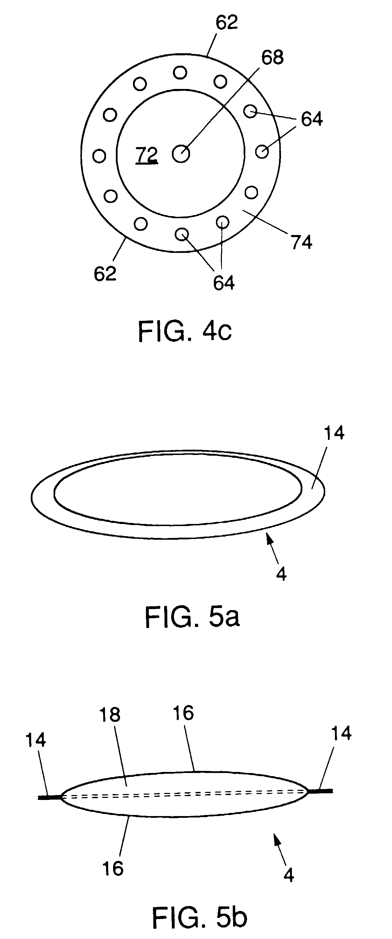

In Figs. 1a and 1b, reference numeral 1 designates a possible embodiment of a coffee filtering system according to the invention. The coffee filtering system 1 comprises a coffee filtering holder 2 having received therein a sachet 4 filled with ground coffee. The coffee filtering holder 2 comprises a water reservoir 6 in which hot water can be introduced. The coffee filtering holder 2 further comprises a bottom 8 with at least one orifice 10. The sachet 4 is disposed between the water reservoir 6 and the orifice 10, with a circumferential edge 12 of the sachet connected to an inner wall 14 of the holder 2 so as to form a seal. In this example the sachet 4 is disc-shaped (see Figs. 5a and 5b). The sachet is made up of two circular sheets of filter paper 16, which are bonded to each other adjacent their peripheral edges. The sachet itself is filled with ground coffee 18.

The coffee filtering holder 2 according to Fig. 1 comprises a first holder part 20, which includes the bottom 8, and a second holder part 22. In this example, the second holder part 22 comprises at least substantially the water reservoir 6. In a service position, the circumferential edge 14 of the sachet 4 is arranged in sealing engagement between a closing part 24 of the first holder part 20 and a closing part 26 of the second holder part 22. In this example, the closing part 24 of the first holder part 20 consists of a flexible ring. The second holder part 22 is of tubular design with two opposite open ends 28 and 30. The closing part 26 of the second holder part 22 is formed by a circumferential edge of the open end 30. The circumferential edge 14 of the sachet 4 is clamped between the closing parts 24 and 26. The closing part 26 of the second holder part 22 will thereby deform the flexible ring 24 slightly, so that a good liquid-tight connection is effected.

The first holder part 20 is connected to the second holder part 22 for rotation about an axis of rotation 32, which runs parallel to the bottom 8.

Further, on the outside of the holder 2, a circular edge 33 is present around the orifice 10. The holder 2 according to Fig. 1 further comprises closing means for the purpose, in use, of pressing the closing parts towards each other into sealing engagement. These closing means comprise a bracket, connected to an outside of the second holder part 22, which bracket 34 has a bent free end 36, which is hooked behind a part of the first holder part 22 with a clamping fit. The bracket 34 is connected to the second holder part 22 for rotation about an axis of rotation 38, which is likewise parallel to the bottom 8.

The operation of the system according to Fig. 1 is as follows. The system is placed on a cup, with the edge 33 falling within the contours of the cup, so that the holder 2 cannot easily slip off the cup. Then hot water is introduced into the water reservoir 6. This hot water will then end up as coffee extract in the cup via the sachet 4 and the orifice 10.

After all the hot water has been transported to the cup in the form of coffee extract and so the water reservoir is empty, the cup of coffee is ready for consumption and the coffee filtering system 1 can be removed from the cup. Then the bracket 34 is swung upwards, whereafter the second holder part 22 is swung clear from the service position relative to the first holder part 20 about the axis of rotation 32. The used sachet 4 is now rendered loose and therefore can be removed. If desired, a new sachet 4 can be placed at the position intended for the purpose and be clamped again by swinging the second holder part back to its service position and hooking the bracket 34 back onto the first holder part 20 again. The coffee filtering system is now ready for use again.

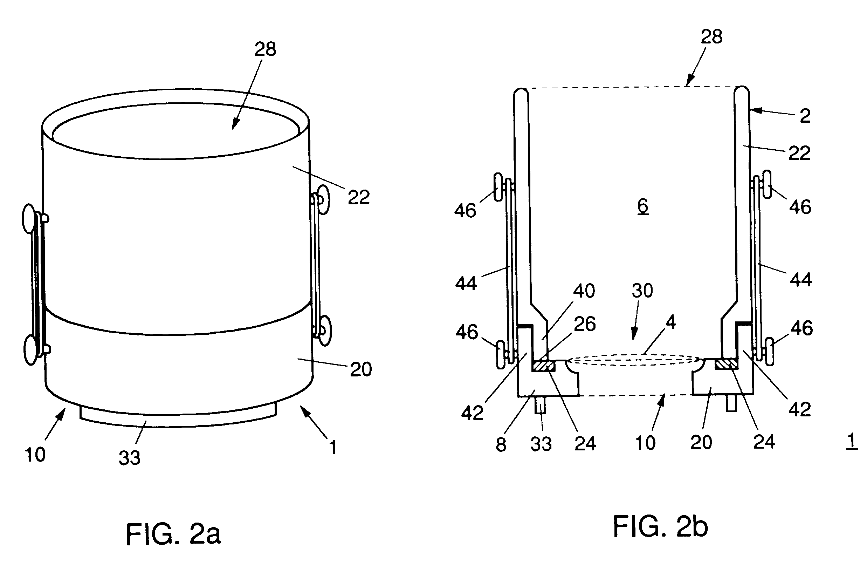

Figs. 2a and 2b show a variant of a coffee filtering system 1 according to the invention. According to this variant, the second holder part is placed on the first holder part. To that end, the second holder part comprises a reduced portion 40 which in use is located telescopically within an upright sidewall 42 of the first holder part 20. The open end 30 is located in the reduced portion 40. The closing part 26 is accordingly formed by a circumferential edge of the reduced portion 40. In contrast with Fig. 1, the first holder part is not rotatably connected to the second holder part. Instead, the closing means comprise elastics and/or springs 44, which are connected between projections 46 of the first and second holder part, in such a manner that the closing parts 24, 26 can be pressed towards each other. After the preparation of a cup of coffee, the elastics and/or springs 44 can be removed, so that the second holder part 22 can be removed from the first holder part 20. The used sachet 4 is thereby rendered clear and can be replaced by a new sachet.

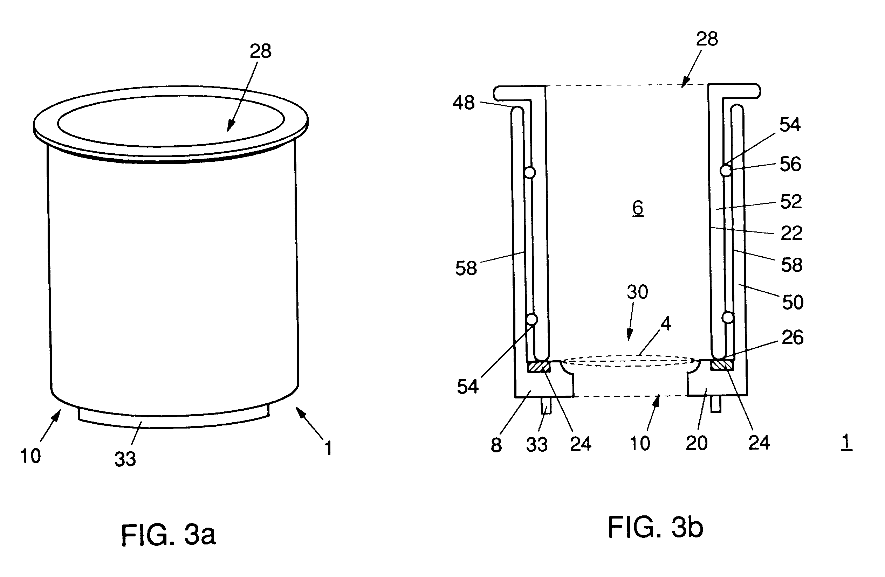

Figs. 3a and 3b show a third embodiment of a coffee filtering system according to the invention, where the first holder part 20 is of tubular design, a first end comprising the bottom 8 and a second end 48 being open. The first holder part 20 therefore comprises a circular sidewall 50 extending from the bottom 8. In use, the tubular second holder part 22 is substantially slid within the tubular first holder part 20. In an outer wall 52 of the second holder part, two circumferential grooves 54 have been provided. Arranged in each of these grooves is a flexible ring 56, closed in itself, which projects partly outside the grooves. In use, these flexible rings are disposed in clamping engagement against an inner wall 58 of the tubular first holder part.

The preparation of a single cup of coffee proceeds entirely analogously to that described in relation to Figs. 1 and 2. After preparing the coffee extract, the second holder part 22 is slid from the first holder part 20. The sachet 4 can then be replaced by a new sachet again. Then the second holder part 22 is slid into the first holder part 20 again. Next, the second holder part and the first holder part are slightly pressed towards each other, in such a manner that the closing parts 24 and 26 come to lie in clamping engagement with each other, with the peripheral edge of the sachet between them. The rings 56 provide that the first and second holder parts 20, 22, after the sachet has been placed, cannot move relative to each other, so that the sachet is connected with the holder 1 in a liquid-tight manner. The rings 56 accordingly form means for the purpose of receiving the circumferential edge of the sachet clamped between the closing parts of the first and second holder parts.

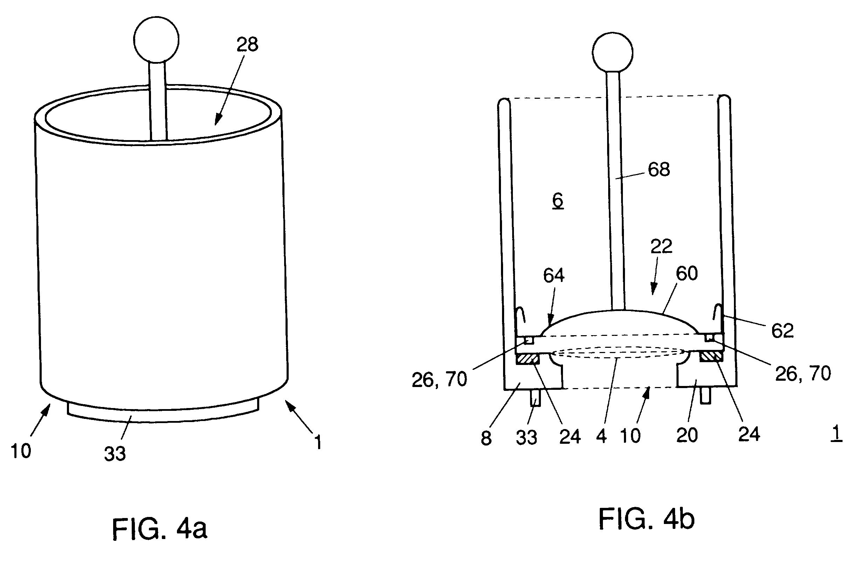

Finally, Figs. 4a and 4b show a fourth possible embodiment of the coffee filtering system according to the invention, where the first holder part 20 has the same shape as described in relation to Fig. 3. The second holder part 22 in this example is designed as a lid. The second holder part 22 comprises a dish-shaped lid surface 60 with upwardly bent peripheral edges 62. The lid surface 60 and the peripheral edges 62 are of spring material such as plastic and/or metal. The lid surface 60 comprises a number of orifices 64. Further, the second holder part comprises an upright stem 68 connected to the lid surface. Arranged on an underside of the second holder part 22 is a circular edge 70, closed in itself, which forms the closing part 26 of the second holder part 22. The lid surface 60 comprises a curved central portion 72, an annular portion 74 which adjoins the circumferential edge of the curved central portion 72, while the upwardly bent peripheral edges 62 adjoin the outer peripheral edge of the annular portion 74. The above-mentioned edge 70 is provided on the annular portion 74. The operation of the system is as follows. Again, for the purpose preparing a cup of coffee, hot water is introduced into the water reservoir 6. The hot water will respectively flow through the openings 64, through the sachet 4 and through the orifice 10 as coffee extract into a cup arranged under the system 1. After the entire water reservoir has drained, the second holder part 22 can be taken from the first holder part 20 by pulling the stem 68. Again the sachet is rendered free and can be replaced by a new sachet. Then the second holder part 22 is slid back into the first holder part 20. Then the peripheral edges of the sachet 4 again end up in clamped engagement between the flexible ring 24 and the edge 70. The upright edge 62 of the second holder part is received with a clamping fit in the first holder part 20. Thus it is possible to press the first and second holder parts firmly towards each other so as to effect a liquid-tight connection with the sachet 4. The function of the clamping, bent peripheral edge 62 is thus comparable to that of the rings 56 of Fig. 3.

## Claims

1. A coffee filtering system for preparing a single cup of coffee, comprising a coffee filtering holder for arrangement on a beverage container, such as a cup, mug or glass and the like, and a sachet filled with ground coffee, the holder comprising a water reservoir in which hot water can be provided and a bottom with at least one orifice, while in use the sachet is located between the water reservoir and the orifice, with a circumferential edge of the sachet connected to an inner wall of the holder in sealing engagement, characterized in that the coffee filtering holder comprises a first and a second holder part, with the first holder part comprising said bottom, and when the first and second holder parts are in a service position, said circumferential edge of the sachet is disposed between closing parts of the first and second holder parts in sealing engagement therewith, while the first and second holder parts can be displaced relative to each other to leave the service position, so that the sachet is rendered free and can be replaced by another sachet.

2. A coffee filtering system according to claim 1, characterized in that the coffee filtering system comprises means for receiving the circumferential edge between the closing parts of the first and second holder parts in clamped engagement.

3. A coffee filtering system according to claim 1 or 2, characterized in that the second holder part comprises at least substantially said water reservoir and is of tubular design with two opposite open ends, wherein the closing part of the first holder part is formed by a flexible element extending around the orifice and wherein the closing part of the second holder part is formed by a circumferential edge of one of the open ends.

4. A coffee filtering system according to claim 3, characterized in that the second holder part is rotatably connected to the first holder part, so that the second holder part, after use, can be swung clear of the first holder part for the purpose of replacing the sachet.

5. A coffee filtering system according to claim 4, characterized in that the second holder part is connected to the first holder part for rotation about an axis of rotation which runs parallel to said bottom.

6. A coffee filtering system according to claim 3, characterized in that the first holder part is of tubular design, a first end thereof comprising said bottom and a second end thereof being open, wherein, in use, the tubular second holder part is substantially slid into the tubular first holder part.

7. A coffee filtering system according to claim 6, characterized in that a flexible ring is provided around an outer wall of the second holder part, which ring, in use, is in clamping abutment with an inner wall of the tubular first holder part.

8. A coffee filtering system according to claim 1 or 2, characterized in that the first holder part is of tubular design, a first end thereof comprising said bottom and a second end thereof being open; that the second holder part is designed as a lid, wherein the second holder part comprises a lid surface provided with at least one opening, with upwardly bent peripheral edges and an upright stem which is connected to the lid surface, wherein, in use, an outside of the bent sidewalls is connected to an inner wall of the first holder part in clamping engagement therewith.

9. A coffee filtering system according to any one of the preceding claims, characterized in that the holder further comprises closing means for the purpose, in use, of pressing said closing parts towards each other into sealing engagement.

10. A coffee filtering system according to claims 5 and 9, characterized in that said closing means comprise a bracket connected to an outside of the second holder part, said bracket comprising a free end which can be hooked behind a part of the first holder part into clamping engagement therewith.

11. A coffee filtering system according to claim 9, characterized in that the closing means comprise at least an elastic and/or spring.

12. A coffee filtering system according to any one of the preceding claims, characterized in that the sachet is disc-shaped, with the circumferential edge of the sachet comprising no ground coffee.

13. A coffee filtering holder for use in a coffee filtering system according to any one of the preceding claims.

14. A sachet for use in a coffee filtering system according to any one of the preceding claims 1-12.
